# EUROPÄISCHE PATENTSCHRIFT

(11) **EP 1 064 521 B1**
(45) Veröffentlichungstag und Bekanntmachung des Hinweises auf die Patenterteilung: **19.06.2002**
(21) Anmeldenummer: 99939851.4
(22) Anmeldetag: 16.03.1999
(51) Int. Cl.: G01C 21/20, G08G 1/0969

(54) **DATENVORRICHTUNG FÜR EIN KRAFTFAHRZEUG**
DATA DEVICE FOR A MOTOR VEHICLE
DISPOSITIF DE DONNEES POUR UN VEHICULE A MOTEUR

(30) Priorität: 18.03.1998 DE 19811707
(43) Veröffentlichungstag der Anmeldung: 03.01.2001
(73) Patentinhaber: ROBERT BOSCH GMBH, 70442 Stuttgart (DE)
(72) Erfinder: VAHLE, Andreas, D-31139 Hildesheim (DE); SPIEGELBERG, Tilo, D-31134 Hildesheim (DE); OBERLAENDER, Ralf, D-35606 Solms (DE)
(86) Internationale Anmeldenummer: DE9900710
(87) Internationale Veröffentlichungsnummer: WO9947893

(56) Entgegenhaltungen:
- EP-A- 0 510 915
- DE-A- 4 033 668
- DE-A- 19 718 106
- US-A- 5 412 573

## Beschreibung

### Stand der Technik

Die Erfindung geht aus von einer Datenvorrichtung für ein Kraftfahrzeug nach der Gattung des unabhängigen Patentanspruchs. Es sind bereits Datenvorrichtungen für ein Kraftfahrzeug bekannt, die für Telematic-Dienste ausgelegt sind. Neben einem Telefon weisen derartige Datenvorrichtungen eine Datenbank, einen Satelliten-Empfänger und eine Anzeige auf.

### Vorteile der Erfindung

Die erfindungsgemäßen Vorrichtungen mit den Merkmalen der unabhängigen Patentansprüche haben demgegenüber den Vorteil, daß dem Nutzer eine Vielzahl von nützlichen Informationen zur Verfügung gestellt werden. Die Datenbank ist sehr einfach aufgebaut und nutzt Daten die bereits für TMC oder Telematic-Dienste vorliegen. Durch den Satellitenempfänger können weitere nützliche Daten im KFZ wie eine präzise Zeitangabe oder eine Information zur Geschwindigkeit des KFZ erzeugt werden.,

Vorteilhafte Weiterbildungen und Verbesserungen der erfindungsgemäßen Datenvorrichtung ergeben sich durch die Merkmale der abhängigen Patentansprüche. Um dem Benutzer eine unmittelbare Orientierung zu ermöglichen, wird entweder der Name des Datensatzes angezeigt, der der aktuellen Position am nächsten kommt oder es wird in Abhängigkeit von der Bewegungsrichtung der Name des nächsten unmittelbar vor dem Fahrzeug liegenden Datensatzes ausgewählt. Weiterhin ist es auch möglich, daß der Benutzer einen Datensatz auswählt. Es wird dann jeweils der Abstand und die Richtung von der aktuellen Position zur Position des ausgewählten Datensatzes angezeigt. Die Datenbank kann auch für andere Aufgaben, beispielsweise TMC oder Telematic-Dienste genutzt werden. Wenn das Datengerät für Telematic-Dienste ausgerüstet ist, werden die Informationen der Datenbank und des Satelliten-Empfängers auch dann genutzt, wenn kein Telematic-Informationen eingekauft werden. Dem Nutzer wird somit ein Zusatznutzen auch dann geboten, wenn er für eine bestimmte Fahrt keine Telematic-Information einkauft.

### Zeichnungen

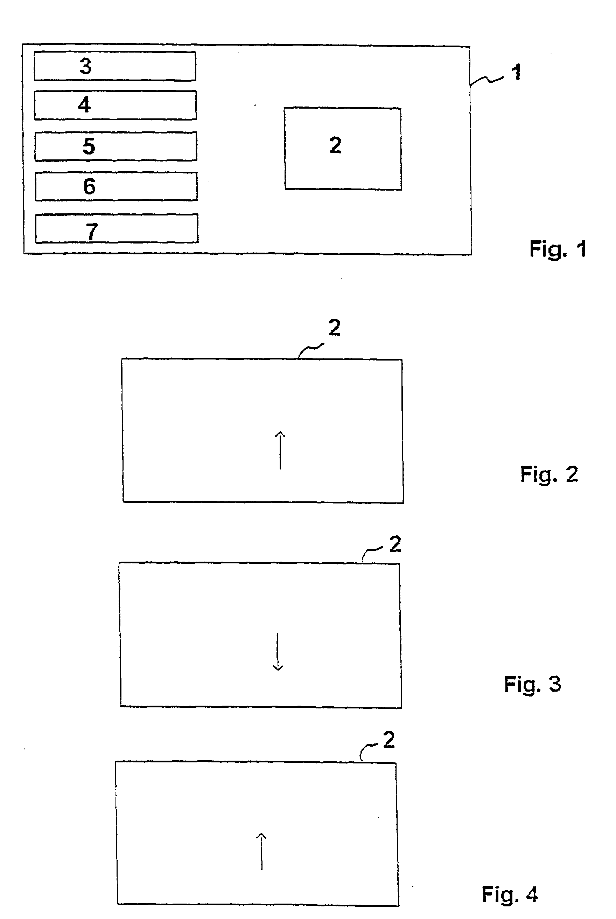

Ausführungsbeispiele der Erfindung sind in den Zeichnungen dargestellt und in der nachfolgenden Beschreibung näher erläutert. Es zeigen die Figur 1 eine schematische Ansicht der Datenvorrichtung und die Figuren 2 bis 11 unterschiedliche Daten auf der Anzeige der Datenvorrichtung.

### Beschreibung

In der Figur 1 wird schematisch eine erfindungsgemäße Datenvorrichtung gezeigt. Die Datenvorrichtung 1 weist eine Anzeige 2 auf, die als Bildschirm oder Display ausgebildet ist. Weiterhin ist ein Satelliten-Empfänger 3, eine Datenbank 4, ein Telefon 5, ein Rechner 6 und ein Radio 7 vorgesehen. Das Display 2 dient zur Darstellung von Informationen in der Form von Buchstaben oder graphischen Symbolen. Für die folgende Beschreibung wird davon ausgegangen, daß es sich bei dem Satelliten-Empfänger um einen GPS-Empfänger (GPS = global positioning system), handelt Es sind jedoch auch andere Satelliten-Ortungssysteme wie z.B. das russische GLONASS verwendbar. Durch den GPS-Empfänger 3 werden GPS-Daten von den dafür vorgesehenen Satelliten empfangen und aus den so empfangenen Daten wird die aktuelle Position der Datenvorrichtung 1 ermittelt. Die Position wird üblicherweise in der Angabe der geographischen Länge und Breite angegeben. In der Datenbank 4 sind Ortsdatensätze gespeichert. Diese Ortsdatensätze enthalten mindestens einen Ortsnamen und geographische Daten, die dem Ortsnamen zugeordnet sind. Die Abspeicherung der geographischen Daten erfolgt beispielsweise wiederum in der Angabe von geographischen Längen- und Breitenangaben. Unter Orte sind hier nicht nur Städte wie beispielsweise Berlin, Frankfurt, Hannover zu verstehen. Es können beispielsweise auch Abfahrten oder Auffahrten von Autobahnen oder Raststätten auf Autobahnen gespeichert sein. Für diese würde dann neben den Namen der Abfahrten auch die Nummer der Autobahnen gespeichert sein oder weitere Informationen, beispielsweise für welche Städte diese Ausfahrt benutzt werden soll. Desgleichen können auch bestimmte Sehenswürdigkeiten, Plätze, markante Punkte innerhalb von Städten oder dergleichen abgespeichert sein.

Der in der Figur 1 gezeigte Rechner 6 übernimmt die Steuerungsfunktionen innerhalb der Datenvorrichtung 1 beispielsweise die Ansteuerung der Anzeige 2. Die einzelnen Steuerfunktionen können jedoch auch auf die jeweiligen Komponenten verteilt sein.

Das Telefon 5 ist als übliches Mobilfunktelefon ausgelegt. Durch das Telefon 5 können beispielsweise Nachrichten, die Verkehrsfunkinformationen beinhalten, empfangen werden.

Weiterhin kann das Telefon 5 natürlich für Telefongespräche eines Nutzers der Datenvorrichtung 1 genutzt werden. In der Figur 1 wird zusätzlich noch ein Radio 7 gezeigt. Bei der Datenvorrichtung nach der Figur 1 wird insbesondere an eine Vorrichtung gedacht, die in einem Kraftfahrzeug in den Schacht eingebaut wird, der üblicherweise für Autoradios vorgesehen ist. Es ist daher in der Figur 1 noch das Radio 7 vorgesehen, was als herkömmliches Autoradio ausgebildet ist. Für die weitere Beschreibung der Datenvorrichtung 1 wird davon ausgegangen, daß die Datenvorrichtung 1 in einem Kraftfahrzeug eingebaut ist.

Der GPS-Empfänger 3 ermittelt kontinuierlich die aktuelle Position des Kraftfahrzeugs. Sofern die Datenvorrichtung 1 von dem Benutzer in einen entsprechenden Betriebsmodus gebracht ist, werden diese Daten dazu benutzt, um zusammen mit den Daten in der Datenbank 4 für den Benutzer nützliche Informationen auf dem Display 2 darzustellen. Ein erstes Ausführungsbeispiel wird in den Figuren 2 bis 4 beschrieben.

Für das Ausführungsbeispiel der Figuren 2 bis 4 wird davon ausgegangen, daß die Datenvorrichtung 1 in einem Kraftfahrzeug eingebaut ist, welches sich auf der Autobahn A66 kurz vor der Ausfahrt Hattersheim befindet. Durch den GPS-Empfänger 3 wird die aktuelle Position des Kraftfahrzeugs ermittelt. Durch einen Vergleich der aktuellen Position mit Datensätzen in der Datenbank 4 wird derjenige Datensatz ausgewählt, dessen geographische Position der aktuellen Position des Kraftfahrzeugs am nächsten kommt. Dabei handelt es sich um den Datensatz, der der Autobahnabfahrt Hattersheim zugeordnet ist. Neben dem Namen Hattersheim enthält dieser Datensatz noch die zusätzliche Information, daß es sich um eine Autobahnabfahrt handelt und daß diese Autobahnabfahrt auf der A66 gelegen ist. Durch ein Vergleich der Positionsdaten kann zusätzlich noch der Abstand zur Abfahrt im vorliegenden Beispiel 2,2 Kilometer ermittelt werden. In der Figur 2 wird die Anzeige auf dem Display 2 gezeigt, auf dem die aktuelle Information dargestellt ist. Dabei wird noch ein Richtungspfeil dargestellt, der die Richtung des KFZ zur Ausfahrt Hattersheim angibt.

In der Figur 3 wird die Information gezeigt, wie sie auf dem Display 2 kurz nach dem Passieren der Abfahrt Hattersheim dargestellt wird. Es wird nach wie vor die Abfahrt Hattersheim auf der A66 dargestellt, wobei jedoch im Unterschied zur Figur 2 der Richtungspfeil umgedreht ist. Damit wird angedeutet, daß das Kfz bereits die Abfahrt Hattersheim passiert hat und sich in der Figur 3 0,8 Kilometer hinter der Abfahrt Hattersheim befindet.

Der Anzeige der Figuren 2 und 3 liegt zugrunde, daß immer der Datensatz ausgewählt wird, dessen geographischen Daten in der Datenbank 4 der aktuellen Position am nächsten kommt. Durch die Aufeinanderfolge von Daten des GPS-Empfängers 3 kann natürlich auch eine Bewegungsrichtung des Kraftfahrzeuges ermittelt werden. In den Figuren 2 und 3 wird dies nur dazu benutzt, einen Pfeil darzustellen, der angibt, ob man sich auf der Autobahn noch vor oder bereits nach der Abfahrt befindet. Die Richtungsinformation kann jedoch auch dazu benutzt werden, daß immer nur die Orte dargestellt werden, die sich unter Berücksichtigung der Bewegungsrichtung vor dem Fahrzeug befinden. Dies würde bedeuten, daß nach dem Passieren der Abfahrt Hattersheim nicht mehr der Datensatz für die Abfahrt Hattersheim ausgewählt ist, sondern der in Bewegungsrichtung nachfolgende Datensatz für das Krifteler Dreieck, wie dies in der Figur 4 gezeigt wird. Es sind auch beliebige Abstufungen möglich, beispielsweise daß ein Umschalten der Anzeige die Bewegungsrichtung derart berücksichtigt, daß bei einem Drittel der Strecke zwischen zwei aufeinanderfolgenden gespeicherten Orten eine Umschaltung der Anzeige auf den neuen, das heißt in Bewegungsrichtung vor dem Fahrzeug liegenden Ort erfolgt.

Das zu den Figuren 2 und 4 geschilderte Verfahren ist besonders vorteilhaft, wenn sich das Kraftfahrzeug auf eine Autobahn bewegt, da so der Fahrer über seine momentane Position auf dem Laufenden gehalten wird und für ihn interessante Abfahrten rechtzeitig angezeigt werden. Besonders vorteilhaft ist dabei auch, daß auf eine Autobahn die einzelnen Abfahrten, Autobahnkreuze, -dreiecke, -raststätten und dergleichen streng aufeinanderfolgen und so eine klare Abfolge von anzuzeigenden Orten ermittelbar sind. Auf einer Autobahn wird daher die Anzeige bevorzugt verwendet, bei der jeweils der vor dem KFZ liegende Datensatz angezeigt wird.

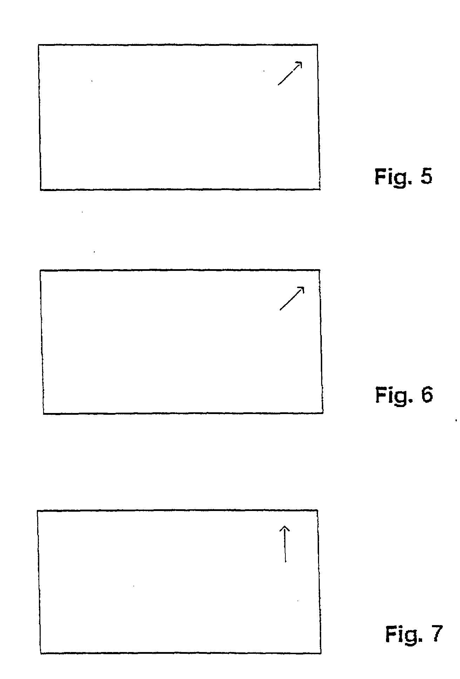

Eine weitere Methode, wie aus den Daten und den Daten der Datenbank 4 sinnvolle Anzeigen für den Fahrer ermittelt werden können, werden in den Figuren 5 bis 7 beschrieben. Dabei wird davon ausgegangen, daß der Benutzer des Kraftfahrzeuges, das heißt in der Regel der Fahrer, durch Vorauswahl beispielsweise aus einer alphabetischen Liste ein Fahrziel ausgewählt hat. Exemplarisch wird hier das Fahrziel Funkturm Berlin beschrieben. Die Ausfahrt kann beispielsweise durch eine Liste erfolgen, in der alphabetisch die Namen aller Datensätze der Datenbank 4 aufgelistet sind. Durch entsprechende Suchtasten kann dann der Fahrer das Fahrziel auswählen, welches, wie in der Figur 5 dargestellt wird, auf dem Display 2 angezeigt wird. Durch Vergleich der aktuellen GPS-Daten mit den in der Datenbank 4 gespeicherten Daten kann dann der Abstand zwischen dem Fahrzeug und dem Fahrziel angezeigt werden. In der Figur 5 wird beispielsweise die Entfernung 280 Kilometer angezeigt.

Weiterhin kann aufgrund der Abfolge von aktuellen GPS-Daten eine Richtungsinformation ermittelt werden und durch zusätzliche Verknüpfung mit den Zieldaten kann dann ein Pfeil dargestellt werden, der die Richtung zum Ziel relativ zur Fahrtrichtung anzeigt. Dieser Pfeil ermöglicht dann eine grobe Orientierung des Fahrers dahingehend, in welcher Richtung sein Fahrziel liegt.

Anstatt der Entfernungsangabe können auch Zeitinformationen gewonnen werden. Dazu wird beispielsweise die bisherige Durchschnittsgeschwindigkeit des Fahrzeuges zugrundegelegt und es wird errechnet, wie lange die verbliebene Restfahrzeit bis zum Zielpunkt ist. Dies wird beispielsweise in der Figur 6 dargestellt. Weiterhin wird in der Figur 6 dargestellt, daß der im Display 2 dargestellte Pfeil immer auf das Fahrziels relativ zur Fahrtrichtung zeigt.

Alternativ ist es auch möglich, daß statt der verbliebenen Restfahrzeit die ungefähre Ankunftszeit dargestellt wird. Die Ankunftszeit wird dadurch ermittelt, indem die verbliebene Restfahrzeit zu der aktuellen Zeit hinzuaddiert wird. Die entsprechende Darstellung im Display 2 wird in der Figur 7 gezeigt.

Das erfindungsgemäße Verfahren ist besonders einfach, wenn die Datenbank 4 oder zumindestens Teile der Datenbank 4 bereits in der Datenvorrichtung 1 enthalten sind. Teile der Datenbank können beispielsweise in Form einer TMC-Datenbank (traffic message channel) oder einer Telematic-Datenbank bereits in der Datenvorrichtung vorhanden sein. Bei TMC handelt es sich um die codierte Übertragung von Verkehrsinformationen über einen normalen Rundfunkkanal. Die dafür benötigte Datenbank enthält u.a. die Namen aller Ausfahrten von Autobahnen. Weiterhin sind Datenbanken für Telematic-Dienste bekannt. Bei den Telematic-Diensten handelt es sich auch um Verkehrsinformationen, die über ein Mobilfunktelefon an einen Endabnehmer überspielt werden. Auch hier werden die Daten sehr komprimiert übertragen und benötigen eine Datenbank im Empfänger, der eine Decodierung der komprimierten Daten erlaubt. Erfindungsgemäß können diese Datenbanken auch benutzt werden, wenn keine Telematic-Dienste über das Telefon eingekauft werden. Es wird dem Benutzer des Endgeräts somit eine Nutzung der in der Datenbank enthaltenen Informationen ermöglicht, auch wenn er für eine bestimmte Fahrt beschlossen hat, keine Verkehrsinformationen über das Telefon einzukaufen.

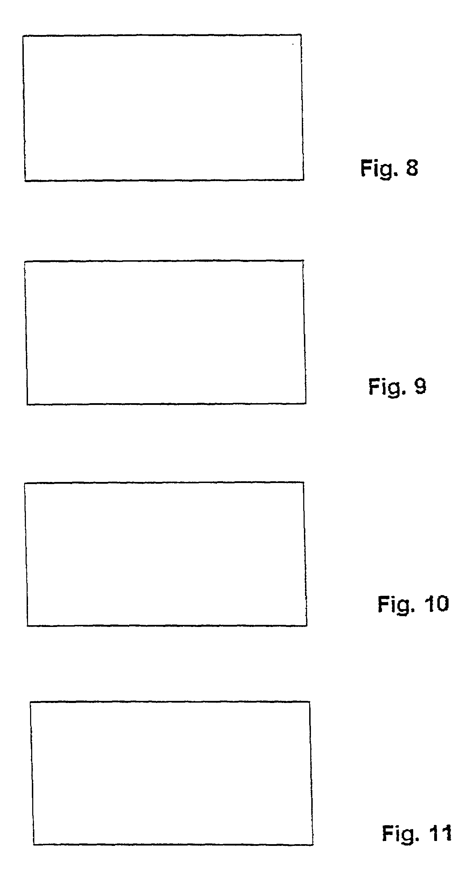

Die GPS-Daten können auch benutzt werden, um weitere für den Fahrer interessante Informationen zu erzeugen. Die GPS-Daten enthalten z.B. eine hochpräzise Zeit- und Datumsangabe. Diese kann wie in der Figur 8 gezeigt wird, zur Angabe einer sehr präzisen Zeit- und Datumsangabe benutzt werden.

Weiterhin können die primären GPS-Daten auch unmittelbar angezeigt werden, wie dies in der Figur 9 gezeigt wird. Exemplarisch wird dabei in der Figur 9 gezeigt, daß die geographische Positionsangabe 9 Grad, 53 Minuten und 29 Sekunden in der Länge und 52 Grad, 6 Minuten und 48 Sekunden in der Breite angezeigt wird. Weiterhin kann dabei auch die Höhe, in der Figur 9 eine Höhe von 108 Metern über Normal-0 angezeigt werden.

Weiterhin kann aufgrund der Abfolge von GPS-Daten eine Fahrtrichtung des Fahrzeugs bestimmt werden. In der Figur 10 wird dies mittels einer Kompaßrose für ein Fahrzeug gezeigt, welches in Richtung West fährt. Aufgrund der der Dopplerverschiebung der GPS-Signale kann, unabhängig vom normalen Tachometer des Kraftfahrzeugs, die Geschwindigkeit des KFZ bestimmt werden. Die Datenvorrichtung kann somit alle Funktionen des Tachometers übernehmen und ist dabei unabhängig von den sonst für einen Tachometer störenden Einflüssen wie Schlupf oder veränderter Reifengröße.

Aus den so ermittelten Informationen können dann auch die weiteren Daten ermittelt werden. In der Figur 11 wird eine Display-Darstellung gezeigt, in der der zurückgelegte Weg die dafür benötigte Zeit die Durchschnittsgeschwindigkeit und die Maximalgeschwindigkeit dargestellt werden. Bei der Angabe Weg handelt es sich dabei um eine Angabe die aus den GPS-Daten gewonnen wurde, d.h. um die über der Zeit aufintegrierte Geschwindigkeit aus den GPS-Daten. Die Zeitangabe rechnet sich einfach aus den GPS-Zeiteingaben. Daraus folgert dann die Durchschnittsgeschwindigkeit. Weiterhin kann auch noch die maximale Geschwindigkeit angezeigt werden.

## Patentansprüche

1. Datenvorrichtung für ein Kraftfahrzeug mit
einer Datenbank, in der Ortsdatensätze gespeichert sind, einem Satellitenempfänger zum Empfang zur Positionsbestimmung geeigneter Satellitensignale,
und Mitteln zur Auswahl eines Ortsdatensatzes aufgrund einer aktuellen Fahrzeugposition,
**gekennzeichnet durch**,
eine Fahrtrichtungsbestimmung aufgrund einer Folge aufeinanderfolgender Fahrzeugpositionen, und
eine Auswahl nur eines oder mehrerer solcher Datensätze, deren Koordinaten entlang der ermittelten Fahrtrichtung liegen.

2. Datenvorrichtung nach Anspruch 1, **gekennzeichnet durch** eine Ausgabe mindestens von Teilen in dem oder den ausgewählten Datensätzen enthaltener Informationen oder aufgrund eines Vergleichs der aktuellen Position mit der/den Position/en des oder der ausgewählten Datensätze erzeugter Informationen.

3. Datenvorrichtung nach einem der Ansprüche 1 oder 2, **gekennzeichnet durch** eine Auswahl des Datensatzes, der entlang der Fahrtrichtung der aktuellen Fahrzeugposition am nächsten liegt.

4. Datenvorrichtung nach einem der Ansprüche 1 oder 2, . **gekennzeichnet durch** eine Auswahl des Datensatzes, der in Fahrtrichtung vor dem Fahrzeug der aktuellen Fahrzeugposition am nächsten liegt.

5. Datenvorrichtung nach einem der Ansprüche 1 oder 2, **gekennzeichnet durch** eine Auswahl desjenigen von zwei Datensätzen, die entlang der Fahrtrichtung in Fahrtrichtung vor und hinter dem Fahrzeug der aktuellen Fahrzeugposition am nächsten liegen, wobei die Auswahl anhand eines Vergleichs der Entfernung zwischen aktuellem Fahrzeugstandort und den Koordinaten des zurückliegenden Datensatzes und der Entfernung zwischen aktuellem Fahrzeugstandort und den Koordinaten des vorausliegenden Datensatzes erfolgt.

6. Datenvorrichtung nach einem der vorhergehenden Ansprüche, **dadurch gekennzeichnet, daß** die Entfernung zwischen der aktuellen Position und der Position des ausgewählten Datensatzes ermittelt wird, und daß die Entfernung oder unter zusätzlicher Berücksichtigung der Durchschnittgeschwindigkeit des Fahrzeugs eine Zeitangabe als Information dargestellt wird.

## Claims

1. Data apparatus for a motor vehicle having
a database storing local data records,
a satellite receiver for receiving satellite signals suitable for position-finding,
and means for selecting a local data record on the basis of a current vehicle position,
**characterized by**
determination of a direction of travel on the basis of a series of successive vehicle positions, and
selection of just one or more such data records whose coordinates are situated along the ascertained direction of travel.

2. Data apparatus according to Claim 1, **characterized by** output of at least some information contained in the selected data record(s) or information produced on the basis of a comparison between the current position and the position(s) of the selected data record(s).

3. Data apparatus according to one of Claims 1 or 2, **characterized by** selection of the data record situated closest to the current vehicle position along the direction of travel.

4. Data apparatus according to one of Claims 1 or 2, **characterized by** selection of the data record situated closest to the current vehicle position in the direction of travel in front of the vehicle.

5. Data apparatus according to one of Claims 1 or 2, **characterized by** selection of that data record from two data records which are situated closest to the current vehicle position along the direction of travel in the direction of travel in front of and behind the vehicle, the selection being made on the basis of a comparison of the distance between the current vehicle location and the coordinates of the data record behind with the distance between the current vehicle location and the coordinates of the data record ahead.

6. Data apparatus according to one of the preceding claims, **characterized in that** the distance between the current position and the position of the selected data record is ascertained, and **in that** the distance or, additionally taking into account the average speed of the vehicle, a time statement is displayed as information.

## Revendications

1. Dispositif de données pour un véhicule, comprenant une banque de données contenant des jeux de données de lieu, un récepteur satellite pour recevoir des signaux satellite permettant de déterminer la position et des moyens de sélection d'un jeu de données de lieu à partir de la position actuelle du véhicule,
**caractérisé par**
une détermination de direction de circulation sur la base des positions successives du véhicule et une sélection de seulement un ou plusieurs des jeux de données dont les coordonnées se situent le long de la direction de circulation déterminée.

2. Dispositif de données selon la revendication 1,
**caractérisé par**
l'émission d'au moins des parties des informations contenues dans les jeux de données sélectionnés ou résultant de la comparaison de la position actuelle, et des informations de l'une ou des positions du ou des jeux de données sélectionnés.

3. Dispositif de données selon l'une quelconque des revendications 1 ou 2,
**caractérisé par**
une sélection du jeu de données situé le long de la direction de déplacement, le plus près de la position actuelle du véhicule.

4. Dispositif de données selon l'une quelconque des revendications 1 ou 2,
**caractérisé par**
une sélection du jeu de données situé le plus près de la position actuelle du véhicule en amont du véhicule.

5. Dispositif de données selon l'une quelconque des revendications 1 ou 2,
**caractérisé par**
une sélection de celui des deux jeux de données situé dans la direction de circulation, en amont et en aval du véhicule, le plus près de sa position actuelle, cette sélection se faisant en comparant l'éloignement entre l'emplacement actuel du véhicule et les coordonnées du jeu de données en aval, avec l'éloignement entre l'emplacement actuel du véhicule et les coordonnées du jeu de données en amont.

6. Dispositif de données selon l'une quelconque des revendications précédentes,
**caractérisé en ce qu'**
on détermine l'éloignement entre la position actuelle et la position du jeu de données sélectionné et on affiche comme information l'éloignement ou une indication de temps en tenant compte en plus de la vitesse moyenne du véhicule.
